# EUROPEAN PATENT SPECIFICATION

(11) **EP 1 180 436 B1**
(45) Date of publication and mention of the grant of the patent: **26.10.2005**
(21) Application number: 01118852.1
(22) Date of filing: 14.08.2001
(51) Int. Cl.: B41M 5/00, C08G 18/44, C08K 3/36, C08K 5/00, C09D 175/06

(54) **Composition for ink-receiving layer, recording material and printed matter obtained using the same**
Zusammensetzung für tintenaufnehmende Schicht, Aufnahmematerial und daraus hergestellter bedruckter Gegenstand
Composition pour couche réceptrice, matériau d'enregistrement et matière imprimée utilisant cette composition

(30) Priority: 15.08.2000 JP 2000246323
(43) Date of publication of application: 20.02.2002
(73) Proprietor: DAINIPPON INK AND CHEMICALS, INC., Itabashi-ku Tokyo (JP)
(72) Inventor: Inoue, Masato, Takaishi-City, Osaka-fu (JP); Tanaka, Yoshimasa, Osaka-City, Osaka-fu (JP); Matsuo, Masatoshi, Izumiotsu-City, Osaka-fu (JP)
(74) Representative: Albrecht, Thomas

(56) References cited:
- EP-A- 0 965 681
- US-A- 5 376 705
- PATENT ABSTRACTS OF JAPAN vol. 018, no. 415 (C-1233), 4 August 1994 (1994-08-04) & JP 06 122851 A (C I KASEI CO LTD), 6 May 1994 (1994-05-06)
- PATENT ABSTRACTS OF JAPAN vol. 1998, no. 12, 31 October 1998 (1998-10-31) & JP 10 181189 A (DAINIPPON INK &CHEM INC), 7 July 1998 (1998-07-07)

## Description

### FIELD OF THE INVENTION

This invention relates to a composition for an ink-receiving layer, a recording material, and printed matter obtained from the recording material. The composition of the present invention provides an ink-receiving layer excellent in light resistance (resistance against chalking and fading by light), printability (ability to form a clear image), and water resistance. The recording material having the ink-receiving layer withstands not only indoor but outdoor applications. The printed matter of the invention is widely useful as various signs or advertisements displayed not only indoors but also outdoors.

### BACKGROUND OF THE INVENTION

The recent relaxation of regulations has boosted advertising on the walls of buildings, the bodies of commercial vehicles, e.g., trains and buses, and the like. These advertisements have been painted by hand, but a computer-aided digital printing technique has recently been applied because of the tendency to reduction of artisans, an explosive increase of the amount of advertising, and development of computers. Printing methods in digital printing systems include offset printing, ink jet printing, thermal transfer printing, and electrostatic printing. Where a highly precise print is demanded in order to increase the commercial value of an advertisement, recording materials having an ink-receiving layer are usually used. It is important for the ink-receiving layer, particularly of recording materials used for outdoor advertising, to be excellent in printability, water resistance and light resistance.

For example, recording materials for ink jet printing generally comprise a substrate, such as film, paper or fabric, coated with an ink-receiving layer to improve ink receptivity of film, prevent feathering on paper or fabric and improve color density and water resistance of printed matter. Related art includes methods for obtaining improved printability in which a composition comprising an inorganic pigment such as silica, kaoline and clay dispersed in a water-soluble polymer binder such as polyvinyl alcohol or starch is applied to a substrate to form an ink-receiving layer (see JP-A-59-185690 (The term "JP-A" as used herein means an "unexamined published Japanese patent application"), JP-A-4-219267, JP-A-5-294057). The disadvantage of these methods is insufficient water resistance of the ink-receiving layer because of use of a water-soluble polymer as a binder. Moreover, although it is advised to laminate printed matter with a transparent film for outdoor display, the print undergoes color change or chalking (or dusting) of the inorganic pigment due to poor light resistance of the ink-receiving layer. Chalking can result in separation of laminating film. Therefore, the proposed ink-receiving layer hardly withstands long-term outdoor use.

An ink jet recording material having a layer made of an emulsion of a polyurethane resin containing a polycarbonate chain in the molecule thereof is known (see JP-A-10-181189). This recording material is also difficult to apply to outdoor use on account of insufficient light resistance which easily causes discoloration.

### SUMMARY OF THE INVENTION

An object of the present invention is to provide a composition providing an ink-receiving layer which exhibits excellent light resistance as well as excellent printability and excellent water resistance and therefore withstands not only long-term indoor used but also long-term outdoor use.

Another object of the present invention is to provide a recording material having the ink-receiving layer formed on a substrate, which can provide printed matter withstanding long-term outdoor use.

Still another object of the present invention is to provide printed matter which is produced using the recording material and which withstands long-term outdoor exposure.

Other objects and effects of the present invention will be apparent from the following description.

To solve the above-described problems relating to outdoor advertising, the inventors of the present invention have extensively studied ink-receiving layer compositions, recording materials, and printed matter. As a result, they have completed the present invention.

That is, the above-described objects of the present invention have been achieved by providing the following ink-receiving layers, recording materials and printed matter.
1) A composition for an ink-receiving layer comprising:
   (A) an aqueous polyurethane resin having a polycarbonate chain;
   (B) at least one pigment selected from the group consisting of silica, alumina, calcium carbonate and clay; and
   at least one of (C) a phenolic antioxidant and (D) a hindered amine ultraviolet absorber.
2) The composition according to item 1) above, wherein said pigment (B) is silica.
3) The composition according to item 1) or 2) above, which further comprises (E) a cationic water-soluble resin.
4) The composition according to any one of items 1) to 3) above, which further comprises (F) a nonionic water-soluble resin.
5) The composition according to item 3) above, wherein said cationic water-soluble resin (E) is (E-1) an epichlorohydrin-polyamide resin.
6) The composition according to item 4) above, wherein said nonionic water-soluble resin (F) is (F-1) acetoacetylated polyvinyl alcohol.
7) The composition according to any one of items 1) to 6) above, wherein said aqueous polyurethane resin (A) has an isocyanate component derived from an aliphatic isocyanate.
8) A recording material comprising a substrate having thereon an ink-receiving layer, said ink-receiving layer comprising a composition according to any one of items 1) to 7) above.
9) The recording material according to item 8) above, which is for use in ink jet recording.
10) Printed matter which is obtained by printing an image on a recording material according to item 8) or 9) above by an ink jet printer.
11) Printed matter according to item 10) above, further having a transparent film laminated on the printed surface of said recording material.

### DETAILED DESCRIPTION OF THE INVENTION

The present invention is described in detail below.

The aqueous polyurethane resin having a polycarbonate chain for use in the present invention as component (A) preferably includes a polyurethane resin emulsion, the polyurethane resin containing a polycarbonate chain in its molecule and preferably having a particle size of 3.0 µm. Such a polyurethane resin emulsion can be prepared by a known process. For example, a polyol having a polycarbonate chain (hereinafter referred to as a polycarbonate polyol) and a diisocyanate are allowed to react in a solvent followed by emulsifying.

Examples of the polycarbonate polyol include those obtained by the reaction between a glycol, such as 1,4-butanediol, 1,6-hexanediol or diethylene glycol, and diphenyl carbonate or phosgene. Two or more polycarbonate polyols can be used in combination.

Examples of the diisocyanate include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylenexylylene diisocyanate, hydrogenated xylylene diisocyanate, lysine diisocyanate, isophorone diisocyanate, 4,4'-dicyclohexylmethane diisocyanate, and 3,3'-dimethyl-4,4'-dicyclohexylmethane diisocyanate. These diisocyanate compounds can be used either individually or as a combination of two or more thereof. From the standpoint of providing a recording material with excellent light resistance, aliphatic diisocyanate compounds are preferred. If desired, polyisocyanate compounds having three or more isocyanate groups per molecule can be used in combination in such a proportion that does not impair the effects of the present invention.

The weight ratio of the polycarbonate polyol to the diisocyanate is preferably 50/50 to 95/5 in view of the stability of the resulting aqueous polyurethane resin.

The aqueous polyurethane resin as component (A) can be prepared by any process known in the art. It could be prepared by mechanically dispersing a polyurethane resin having no hydrophilic groups in an aqueous medium by the aid of an externally added emulsifying agent, but the following three processes are recommended.

### Process-1:

A compound containing active hydrogen, a compound containing a hydrophilic group, and a polyisocyanate are allowed to react to prepare a solution or dispersion of a hydrophilic group-containing polyurethane resin in an organic solvent, which is mixed with an aqueous solution containing, if necessary, a neutralizing agent.

### Process-2:

A compound containing active hydrogen, a compound containing a hydrophilic group, and a polyisocyanate are allowed to react to obtain a hydrophilic group-containing and isocyanate-terminated urethane prepolymer. The resulting prepolymer is mixed with an aqueous solution containing a neutralizing agent. Alternatively, a neutralizing agent has previously been incorporated into the prepolymer, and the prepolymer is mixed with water. The resulting aqueous dispersion of the prepolymer is allowed to react with a polyamine.

### Process-3:

A compound containing active hydrogen, a compound containing a hydrophilic group, and a polyisocyanate are allowed to react to obtain a hydrophilic group-containing and isocyanate-terminated urethane prepolymer. The resulting prepolymer is mixed with an aqueous solution containing a neutralizing agent and a polyamine to prepare an aqueous dispersion. Alternatively, a neutralizing agent has previously been incorporated into the prepolymer, and the resulting prepolymer is mixed with an aqueous solution containing a polyamine to obtain an aqueous dispersion.

Part of the polycarbonate polyol can be displaced with other polyols, such as polyether polyols or polyester polyols, so long as the physical properties expected of component (A) are not impaired. In this case, the proportion of the polycarbonate polyol in the total polyol components is preferably 50% by weight or more, still preferably 70% by weight or more.

The aqueous polyurethane resin (A) having a polycarbonate chain exhibits excellent inhibitory effects on chalking of inorganic pigments as compared with other aqueous polyurethane resins prepared from other polyols such as polyether polyols or polyester polyols. The aqueous polyurethane resin (A) having a polycarbonate chain also exhibits excellent water resistance and undergoes little color change by light. So long as the physical properties expected of component (A) are not impaired, other aqueous polyurethane resins prepared from other polyols, such as polyether polyols or polyester polyols, may be used in combination with the aqueous polyurethane resin (A). In this case, the proportion of the other aqueous polyurethane resins is desirably not more than 50% by weight based on the resinous content of the aqueous polyurethane resin (A) having a polycarbonate chain.

The aqueous polyurethane resin (A) having a polycarbonate chain preferably has a nonvolatile content (i.e., the ratio of a residue after treating at 107°C for 2 hours to the initial weight) of 5 to 70%, particularly 10 to 60%, by weight from the standpoint of the particle size and stability of the polyurethane.

A preferred content of component (A) in the composition is 5 to 90%, particularly 10 to 50%, by weight on a solid basis from the viewpoint of chalking preventing effects and light resistance of the ink-receiving layer and printability of the recording material.

Silica, alumina, calcium carbonate and clay, at least one of which is used in the present invention as component (B), are not limited by their preparation processes. Of these pigments, silica is preferred for its ink absorption, dispersibility in a binder and ability to give moderate whiteness to the recording material.

A preferred content of component (B) in the composition is 5 to 70%, particularly 30 to 70%, by weight on a solid basis from the viewpoint of chalking preventing effect and light resistance of the ink-receiving layer and printability of the recording material.

The phenolic antioxidant for use in the present invention as component (C) is effective in preventing chalking of inorganic pigments and improving light resistance. Hindered phenol compounds are particularly preferred for their remarkable effects. A preferred content of component (C) in the composition is 0.01 to 5% by weight from the standpoint of chalking preventing effect and light resistance of the ink-receiving layer.

The phenolic antioxidant (C) includes monophenolic compounds such as 2,6-di-t-butyl-p-cresol and butyrated hydroxyanisole; bisphenol compounds such as 2,2'-methylenebis(4-methyl-6-t-butylphenol) and 2,2'-methylenebis(4-ethyl-6-t-butylphenol); and polymeric phenol compounds such as tetrakis(methylene-3-(3',5'-di-t-butyl-4'-hydroxyphenyl)propionate)methane. Hindered phenol compounds are preferred of them. 3,9-Bis(1,1-dimethyl-2-(β-(3-t-butyl-4-hydroxy-5-methylphenyl)propionyloxy)ethyl)2,4,8,10-tetraoxaspiro(5,5)undecane is a particularly preferred hindered phenol antioxidant, which is commercially available as Adekastab AO-80 from Asahi Denka Kogyo K.K. or as Sumilizer GA-80 from Sumitomo Chemical Co., Ltd. The hindered phenol antioxidants in the form of emulsion are also useful, which are available as Adekastab LX-802 from Asahi Denka Kogyo K.K. or Lacstar DX-108 from Dainippon Ink & Chemicals, Inc.

The hindered amine ultraviolet (UV) absorber for use in the present invention as component (D) is effective in preventing chalking and improving light resistance. A preferred content of component (D) in the composition is 0.01 to 5% by weight on a solid basis from the standpoint of chalking preventing effect and light resistance of the ink-receiving layer and printability of the recording material.

The hindered amine UV absorber (D) has a structure represented by the following formula: 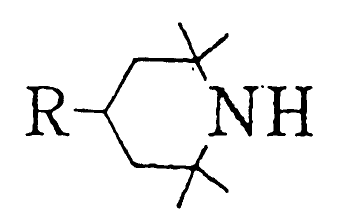 and includes the following compounds. 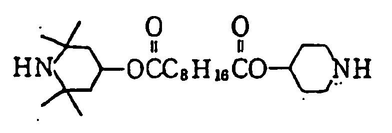 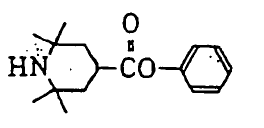 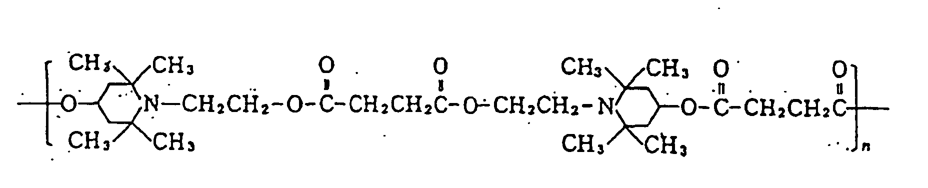 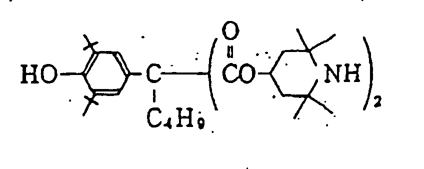 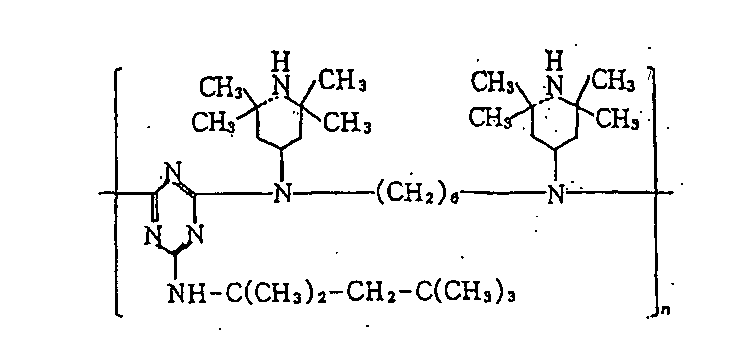 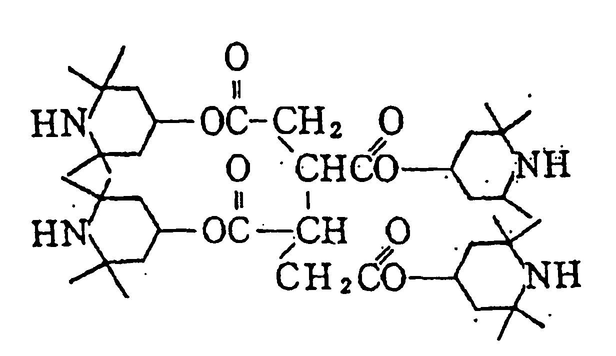 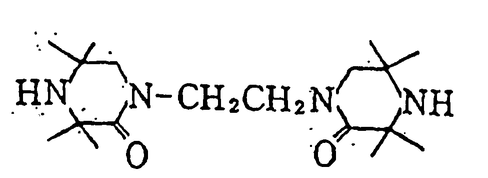 Commercially available hindered amine UV absorbers which are serviceable as component (D) include Mark LA-57 (available from Asahi Denka Kogyo K.K.), Adekastab LA-77 (from Asahi Denka Kogyo), Tinuvin 700, 744, 144 and 622 (from Ciba-Geigy Ltd.), Chimassorb 944 (from Chimosa), and Goodrite UV-304 (from B.F. Goodrich). An emulsified hindered amine UV absorber is available as Lacstar DX-104 from Dainippon Ink & Chemicals, Inc. Particularly preferred of them is Lacstar DX-104.

The cationic water-soluble resin which can be used as component (E) includes water-soluble resins having a tertiary amine group or a quaternary ammonium base, such as polyamide resins, polyimide resins, polyvinyl alcohol, polyvinylpyrrolidone, and epichlorohydrin-polyamide resins having these functional groups. Particularly preferred are epichlorohydrin-polyamide resins (E-1).

The epichlorohydrin-polyamide resins (E-1) are usually obtained by the reaction between polyamide-polyamine and epichlorohydrin, the polyamide-polyamine being obtained by condensing a polyfunctional polyamine (e.g., diethylenetriamine) and a polybasic acid (e.g., adipic acid). The epichlorohydrin-polyamide resins are cationic water-soluble resins having a reactive azetidinium ring in the molecule thereof and are commercially available as wet strength agents which impart water resistance to printed matter and assist clear color development of printed matter.

A preferred content of the cationic water-soluble resin (E) in the composition is 1 to 30% by weight on a solid basis in view of light resistance of the ink-receiving layer and printability of the recording material. Where the epichlorohydrin-polyamide resin (E-1) is used, it is unfavorable to use calcium carbonate as component (B) because calcium carbonate, being an alkaline pigment, induces gel formation when combined with the epichlorohydrin-polyamide resin (E-1) that is cationic.

The nonionic water-soluble resin which can be used as component (F) includes polyvinyl alcohol, polyvinylpyrrolidone, methyl cellulose, starch, polypeptide, and high-molecular polyethylene oxide. Polyvinyl alcohol is preferred for improvement of printability. Polyvinyl alcohol includes completely saponified one, partially saponified one, and acetoacetylated one, with acetoacetylated polyvinyl alcohol (F-1) being particularly preferred.

The acetoacetylated polyvinyl alcohol (F-1) is obtainable by allowing liquid or gaseous diketene to react on a polyvinyl alcohol resin in solution, powder or solid form. It has high reactivity with various crosslinking agents. Incorporation of the acetoacetylated polyvinyl alcohol (F-1) brings about improved binding ability for the pigment (B) thereby enhancing the effect on chalking prevention.

A preferred content of the nonionic water-soluble resin (F) in the composition is 1 to 40% by weight on a solid basis from the standpoint of anti-chalking effect and light resistance of the ink-receiving layer and printability of the recording material.

As far as the effects of the present invention are not ruined, the ink-receiving layer composition can contain various additives, such as nonionic, cationic or anionic surfactants, dispersants for pigments, and silicone type, fluorine type or acetylenediol type leveling agents. These additives are preferably added in an amount of 0.01 to 5% by weight on a solid basis based on the total composition.

The composition can further comprise a binder such as acrylic emulsions, synthetic rubber latices, polyvinyl alcohol, and polyvinylpyrrolidone. A preferred content of the binder component in the composition is 1 to 30% by weight on a solid basis.

The composition can further contain a cationic water-soluble resin having ink fixing properties. A preferred content of the cationic water-soluble resin in the composition is 1 to 30% by weight on a solid basis.

The composition can further contain a water-soluble solvent, such as alcohols and ketones. A preferred proportion of the water-soluble solvent in the total solvent of the composition is 0.1 to 20% by weight.

The composition can further contain a water-soluble metal salt. A preferred content of the water-soluble metal salt in the composition is 1 to 10% by weight on a solid basis.

The recording material of the present invention is obtained by applying the above-described composition to a substrate to form an ink-receiving layer. The recording material has excellent light resistance, undergoing no chalking nor discoloration by light, provides a highly precise printed image in offset printing, ink jet printing, thermal transfer printing, electrostatic printing, and the like, and exhibits excellent water resistance. It withstands not only indoor but also outdoor use for an extended period of time. It is particularly suitable for ink jet printing to provide a printed image of high quality.

The substrate on which the composition is applied mainly includes paper, paperboards and various films. Fibrous substrates, such as spun-bonded nonwoven fabric, are also useful.

Printed matter obtained by printing the recording material of the present invention by offset printing, ink jet printing, thermal transfer printing, electrostatic printing, etc. can be used in wide applications such as signs and advertisements.

The printed matter can be laminated with a transparent film to protect the print against contamination in outdoor use and to effectively prevent feathering of the image or fading of the image by light. Since the printed matter of the invention undergoes no chalking, the laminating film does not separate even in outdoor use. The transparent film includes, but is not limited to, plastic films of polyester, polyvinyl chloride, etc. The method of laminating includes, but is not limited to, adhesion with an adhesive or a pressure-sensitive adhesive.

The composition of the present invention is prepared by thoroughly mixing the above-described components by stirring in an appropriate stirring machine, such as a propeller mixer, a disper or a homogenizer. The composition is applied to a substrate, e.g., film, paper or fabric, by coating, impregnation, transfer and the like method and dried to provide a recording material having an ink-receiving layer. For example, a recording material for electrostatic printing is prepared by coating an appropriate substrate with the composition by air knife coating, blade coating, roll coating, gravure coating, dip coating, size press coating or gate roll coating.

If desired, an anchor coat and/or a back coat may be provided on the substrate, and a topcoat may be provided on the ink-receiving layer.

When printed by offset printing, ink jet printing, thermal transfer printing, electrostatic printing or a like printing technique, the recording material according to the invention forms an image which does not suffer from chalking and is excellent in light resistance, image sharpness and water resistance. Because of the chalking resistance and light resistance, the recording material of the invention can find broad applications for not only indoor uses but also outdoor uses such as signs and advertisements.

### EXAMPLES

The present invention will now be illustrated in greater detail with reference to Examples, but it should be understood that the invention is not limited thereto. Unless otherwise noted, all the parts and percents are given by weight.

Printed matter obtained in Examples and Comparative Examples was evaluated as follows.

### 1) Feathering resistance:

Printed matter was inspected with the naked eye for ink feathering. Feathering resistance was rated A to D according to the following criteria.
- A: No feathering
- B: Little feathering
- C: Slight feathering
- D: Feathering

### 2) Color density:

Color density of printed matter was observed with the naked eye and rated A to D according to the following criteria.
- A: Very good
- B: Good
- C: Slightly poor
- D: Poor

### 3) Water resistance:

Printed matter was soaked in water at room temperature all day long and then inspected with the naked eye for color running or fading and the like to rate the image preservability according to the following criteria.
- A: Very good
- B: Good
- C: Slightly poor
- D: Poor

### 4) Chalking resistance:

Printed matter, laminated or not laminated, was subjected to accelerated light exposure testing in Eye Super UV Tester (energy: 90 mW/cm²; 63°C; supplied by Iwasaki Electric Co., Ltd.) for 60 hours and inspected for chalking in the following manner. Non-laminated printed matter was examined by rubbing the non-printed area with fingers to see whether silica fell off due to chalking, and laminated printed matter was observed with the naked eye to see whether the laminating film separated due to chalking.

### 5) Discoloration resistance:

Printed matter was subjected to accelerated light exposure testing in Eye Super UV Tester (energy: 90 mW/cm²; 63°C) for 60 hours. Resistance to discoloration was rated A to D according to the following criteria based on the discoloration observed on the non-printed area with the naked eye.
- A: Very good
- B: Good
- C: Slightly poor
- D: Poor

### EXAMPLE 1

Aqueous polyurethane resin (A1) having a polycarbonate chain which was prepared by using an aliphatic isocyanate (Hydran HW-970, available from Dainippon Ink & Chemicals, Inc.; nonvolatile content: 40%), silica (B1) (Mizucasil P-78A, available from Mizusawa Industrial Chemicals, Ltd.), a hindered amine UV absorber (D1) (Lacstar DX-104, available from Dainippon Ink & Chemicals, Inc.), an epichlorohydrin-polyamide resin (E1) (WS535, available from Japan PMC Corp.), and acetoacetylated polyvinyl alcohol (F1) (Gohsefimer Z-200, available from The Nippon Synthetic Chemical Industry Co., Ltd.) were compounded at a solid weight ratio A1/B1/D1/E1/F1 = 17/50/1/17/17 to prepare an ink-receiving layer composition having a solids content of 25% (designated composition Z1).

Composition Z1 was applied to a polyester film having been surface-treated to have improved adhesion and dried at 120°C for 3 minutes to obtain a recording material M1 having a 30 µm thick ink-receiving layer.

Recording material M1 was printed on a pigment type ink jet printer, supplied by Graphtec Corp., to obtain printed matter P1, which was evaluated for (1) image feathering, (2) color density, (3) water resistance, (4) chalking resistance after light exposure test, and (5) discoloration on non-printed area after light exposure test. The results obtained are shown in Table 1 below.

### EXAMPLE 2

Printed matter P1 obtained in Example 1 was laminated with a transparent polyester film to obtain laminated printed matter P2, which was evaluated in the same manner as in Example 1. The results are shown in Table 1.

### EXAMPLE 3

Ink-receiving layer composition Z2, recording material M2, and printed matter P3 were obtained and evaluated in the same manner as in Example 1, except for replacing the aqueous polyurethane resin (A1) with an aqueous polyurethane resin (A2) which had a polycarbonate chain and was prepared by using an aliphatic isocyanate (Hydran HW-935, available from Dainippon Ink & Chemicals, Inc.; nonvolatile content: 40%) and replacing D1 with a hindered phenol antioxidant (C1) (Lacstar DX-108, available from Dainippon Ink & Chemicals, Inc.). The results of evaluation are shown in Table 1.

### EXAMPLE 4

Printed matter P3 obtained in Example 3 was laminated with a transparent polyester film to obtain laminated printed matter P4, which was evaluated in the same manner as in Example 1. The results are shown in Table 1.

### EXAMPLE 5

The same aqueous polyurethane resin (A1) as used in Example 1, the same hindered amine UV absorber (D1) as used in Example 1, the same hindered phenol antioxidant (C1) as used in Example 3, silica (B2) (Sylysia 350, available from Fuji Silysia Chemical, Ltd.), an epichlorohydrin-polyamide resin (E2) (WS525, available from Japan PMC Corp.), and acetoacetylated polyvinyl alcohol (F2) (Gosefimer Z-100, available from The Nippon Synthetic Chemical Industry Co., Ltd.) were compounded at a solid weight ratio A1/B2/C1/D1/E2/F2 = 17/50/1/1/17/17 to prepare ink-receiving layer composition Z3 having a solids content of 25%.

Recording material M3 and printed matter P5 were obtained and evaluated in the same manner as in Example 1, except for using the composition Z3. The results of evaluation are shown in Table 1.

### EXAMPLE 6

Printed matter P5 obtained in Example 5 was laminated with a transparent polyester film to obtain laminated printed matter P6, which was evaluated in the same manner as in Example 1. The results are shown in Table 1.

### EXAMPLE 7

Ink-receiving layer composition Z1 prepared in Example 1 was applied to spun-bonded nonwoven fabric of polyester and dried at 120°C for 3 minutes to obtain recording material M4 having an ink-receiving layer. The coating weight of the ink-receiving layer was 50 g/m². Printing material M4 was printed in the same manner as in Example 1 to obtain printed matter P7, which was evaluated in the same manner as in Example 1. The results of evaluation are shown in Table 1.

### EXAMPLE 8

Printed matter P7 obtained in Example 7 was laminated with a transparent polyester film to obtain laminated printed matter P8, which was evaluated in the same manner as in Example 1. The results are shown in Table 1.

**TABLE 1**

| | Example No. | | | | | | | |
|---|---|---|---|---|---|---|---|---|
| | 1 | 2 | 3 | 4 | 5 | 6 | 7 | 8 |
| Ink-receiving Layer Composition | Z1 | Z1 | Z2 | Z2 | Z3 | Z3 | Z1 | Z1 |
| Recording Material | M1 | M1 | M2 | M2 | M3 | M3 | M4 | M4 |
| Printed Matter | P1 | P2 | P3 | P4 | P5 | P6 | P7 | P8 |
| Feathering Resistance | A | A | A | A | A | A | A | A |
| Color Density | A | A | A | A | A | A | A | A |
| Water Resistance | B | A | B | A | B | A | B | A |
| Chalking | not observed | not observed | not observed | not observed | not observed | not observed | not observed | not observed |
| Discoloration Resistance | B | A | B | A | B | A | B | A |

### COMPARATIVE EXAMPLE 1

Ink-receiving layer composition Z4, recording material M5, and printed matter P9 were obtained and evaluated in the same manner as in Example 1, except for replacing the aqueous polyurethane resin (A1) with an aqueous polyurethane resin (A3) which contained no polycarbonate chain and was prepared by using an aliphatic isocyanate (Hydran HW-930, available from Dainippon Ink & Chemicals, Inc.; nonvolatile content: 50%). The results of evaluation are shown in Table 2 below.

### COMPARATIVE EXAMPLE 2

Printed matter P9 obtained in Comparative Example 1 was laminated with a transparent polyester film to obtain laminated printed matter P10, which was evaluated in the same manner as in Example 1. The results are shown in Table 2.

### COMPARATIVE EXAMPLE 3

Ink-receiving layer composition Z5, recording material M6, and printed matter P11 were obtained and evaluated in the same manner as in Example 3, except that component C1 was not used. The results of evaluation are shown in Table 2.

### COMPARATIVE EXAMPLE 4

Printed matter P11 obtained in Comparative Example 3 was laminated with a transparent polyester film to obtain laminated printed matter P12, which was evaluated in the same manner as in Example 1. The results are shown in Table 2.

### COMPARATIVE EXAMPLE 5

Ink-receiving layer composition Z8 was prepared by compounding components B1, D1, E1 and F1 used in Example 1 at a solid weight ratio of 50/1/25/25 to give a solids content of 25%. Recording material M9 and printed matter P15 were obtained and evaluated in the same manner as in Example 1, except for using the composition Z8. The results of evaluation are shown in Table 2.

### COMPARATIVE EXAMPLE 6

Ink-receiving layer composition Z9, recording material M10 and printed matter P16 were obtained and evaluated in the same manner as in Example 1, except for replacing the aqueous polyurethane resin (A1) with an aqueous polyurethane resin (A4) which contained no polycarbonate chain and was prepared by using an aromatic isocyanate (Hydran AP-60LM, available from Dainippon Ink & Chemicals, Inc.; nonvolatile content: 42%). The results of evaluation are shown in Table 3 below.

### COMPARATIVE EXAMPLE 7

Ink-receiving layer composition Z10, recording material M11 and printed matter P17 were obtained and evaluated in the same manner as in Example 1, except for replacing the hindered amine UV absorber (D1) with a benzotriazole UV absorber (D2) (Uniguard E-400, available from Dai-ichi Kogyo Seiyaku Co., Ltd.). The results of evaluation are shown in Table 3.

### COMPARATIVE EXAMPLE 8

Printed matter P17 obtained in Comparative Example 7 was laminated with a transparent polyester film to obtain laminated printed matter P18, which was evaluated in the same manner as in Example 1. The results are shown in Table 3.

**TABLE 2**

| | Comparative Example No. | | | | |
|---|---|---|---|---|---|
| | 1 | 2 | 3 | 4 | 5 |
| Ink-receiving Layer Composition | Z4 | Z4 | Z5 | Z5 | Z8 |
| Recording Material | M5 | M5 | M6 | M6 | M9 |
| Printed Matter | P9 | P10 | P11 | P12 | P15 |
| Feathering Resistance | A | A | A | A | B |
| Color Density | A | A | A | A | D |
| Water Resistance | B | A | B | A | B |
| Chalking | observed | observed | not observed | not observed | observed |
| Discoloration Resistance | C | B | D | C | C |

**TABLE 3**

| | Comparative Example No. | | |
|---|---|---|---|
| | 6 | 7 | 8 |
| Ink-receiving Layer Composition | Z9 | Z10 | Z10 |
| Recording Material | M10 | M11 | M11 |
| Printed Matter | P16 | P17 | P18 |
| Feathering Resistance | A | A | A |
| Color Density | A | A | A |
| Water Resistance | B | B | B |
| Chalking | observed | not observed | not observed |
| Discoloration Resistance | D | D | C |

The composition according to the present invention provides an ink-receiving layer which does not suffer from chalking by light, exhibits excellent light resistance, and forms a clear and water-resistant image by various printing methods, such as offset printing, ink jet printing, thermal transfer printing, and electrostatic printing. The recording material having an ink-receiving layer formed of the composition withstands both indoor and outdoor use.
The printed matter according to the present invention withstands both indoor and outdoor use as signs or advertisements for a long period of time.

## Claims

1. A composition for an ink-receiving layer comprising:
(A) an aqueous polyurethane resin having a polycarbonate chain;
(B) at least one pigment selected from the group consisting of silica, alumina, calcium carbonate and clay; and
at least one of (C) a phenolic antioxidant and (D) a hindered amine ultraviolet absorber.

2. The composition according to claim 1, wherein said pigment (B) is silica.

3. The composition according to claim 1, which further comprises (E) a cationic water-soluble resin.

4. The composition according to claim 1, which further comprises (F) a nonionic water-soluble resin.

5. The composition according to claim 3, wherein said cationic water-soluble resin (E) is (E-1) an epichlorohydrin-polyamide resin.

6. The composition according to claim 4, wherein said nonionic water-soluble resin (F) is (F-1) acetoacetylated polyvinyl alcohol.

7. The composition according to claim 1, wherein said aqueous polyurethane resin (A) has an isocyanate component derived from an aliphatic isocyanate.

8. A recording material comprising a substrate having thereon an ink-receiving layer, said ink-receiving layer comprising a composition according to claim 1.

9. The recording material according to claim 8, which is for use in ink jet recording.

10. Printed matter which is obtained by printing an image on a recording material according to claim 8 by an ink jet printer.

11. Printed matter according to claim 10, further having a transparent film laminated on the printed surface of said recording material.

## Patentansprüche

1. Zusammensetzung für eine tintenaufnehmende Schicht, umfassend:
(A) ein wässriges Polyurethanharz mit einer Polycarbonatkette;
(B) mindestens ein Pigment, ausgewählt aus der Gruppe, bestehend aus Siliciumdioxid, Aluminiumoxid, Calciumcarbonat und Ton; und
mindestens eines von (C) einem phenolischen Antioxidationsmittel und (D) einem gehinderten Amin-UltraviolettAbsorber.

2. Zusammensetzung nach Anspruch 1, wobei das genannte Pigment (B) Siliciumdioxid ist.

3. Zusammensetzung nach Anspruch 1, wobei sie weiterhin (E) ein kationisches wasserlösliches Harz enthält.

4. Zusammensetzung nach Anspruch 1, wobei sie weiterhin (F) ein nichtionisches wasserlösliches Harz enthält.

5. Zusammensetzung nach Anspruch 3, wobei das genannte kationische wasserlösliche Harz (E) (E-1) ein Epichlorhydrin-Polyamid-Harz ist.

6. Zusammensetzung nach Anspruch 4, wobei das genannte nichtionische wasserlösliche Harz (F) (F-1) acetoacetylierter Polyvinylalkohol ist.

7. Zusammensetzung nach Anspruch 1, wobei das genannte wässrige Polyurethanharz (A) eine von einem aliphatischen Isocyanat abgeleitete Isocyanatkomponente hat.

8. Aufnahme- bzw. Aufzeichnungsmaterial, umfassend ein Substrat, das darauf eine tintenaufnehmende Schicht umfasst, wobei die genannte tintenaufnehmende Schicht eine Zusammensetzung nach Anspruch 1 umfasst.

9. Aufnahme- bzw. Aufzeichnungsmaterial nach Anspruch 8 zur Verwendung beim Tintenstrahlaufzeichnen.

10. Bedruckter Gegenstand bzw. bedrucktes Material, erhalten durch Aufdrucken eines Bildes auf ein Aufnahme- bzw. Aufzeichnungsmaterial nach Anspruch 8 durch einen Tintenstrahldrucker.

11. Bedruckter Gegenstand bzw. bedrucktes Material nach Anspruch 10, der/das weiterhin einen transparenten Film aufweist, der auf die bedruckte Oberfläche des genannten Aufnahme- bzw. Aufzeichnungsmaterials auflaminiert ist.

## Revendications

1. Composition pour une couche réceptrice d'encre comprenant :
(A) une résine polyuréthane aqueuse ayant une chaîne polycarbonate ;
(B) au moins un pigment choisi dans le groupe constitué par la silice, l'alumine, le carbonate de calcium et l'argile ; et
au moins un de (C) un antioxydant phénolique et de (D) un absorbeur d'ultraviolets de type amine encombrée.

2. Composition selon la revendication 1, dans laquelle ledit pigment (B) est une silice.

3. Composition selon la revendication 1, comprenant en outre (E) une résine cationique hydrosoluble.

4. Composition selon la revendication 1, comprenant en outre (F) une résine non ionique hydrosoluble.

5. Composition selon la revendication 3, dans laquelle ladite résine cationique hydrosoluble (E) est (E-1) une résine épichlorhydrine-polyamide.

6. Composition selon la revendication 4, dans laquelle ladite résine non ionique hydrosoluble (F) est (F-1) un alcool polyvinylique acétoacétylé.

7. Composition selon la revendication 1, dans laquelle ladite résine polyuréthane aqueuse (A) a un composant isocyanate dérivé d'un isocyanate aliphatique.

8. Matériau d'enregistrement comprenant un substrat ayant sur celui-ci une couche réceptrice d'encre, ladite couche réceptrice d'encre comprenant une composition selon la revendication 1.

9. Matériau d'enregistrement selon la revendication 8, destiné à une utilisation dans un enregistrement à jet d'encre.

10. Matière imprimée qui est obtenue par impression d'une image sur un matériau d'enregistrement selon la revendication 8 par une imprimante à jet d'encre.

11. Matière imprimée selon la revendication 10, ayant en outre un film transparent stratifié sur la surface imprimée dudit matériau d'enregistrement.
